# EUROPEAN PATENT SPECIFICATION

(11) **EP 2 983 347 B1**
(45) Date of publication and mention of the grant of the patent: **27.12.2017**
(21) Application number: 14382310.2
(22) Date of filing: 07.08.2014
(51) Int. Cl.: H04M 7/00, H04L 29/06, H04Q 3/00, H04W 36/00, H04M 3/42, H04M 3/46

(54) **A METHOD FOR ROUTING COMMUNICATION CALLS VIA VOIP AND VIA PSTN TO COMMUNICATION DEVICES AND COMPUTER PROGRAM PRODUCTS THEREOF**
VERFAHREN ZUM ROUTING VON KOMMUNIKATIONSANRUFEN ÜBER VOIP UND ÜBER PSTN AN KOMMUNIKATIONSVORRICHTUNGEN UND COMPUTERPROGRAMMPRODUKTE DAFÜR
PROCÉDÉ PERMETTANT D'ACHEMINER DES APPELS DE COMMUNICATION VIA VOIP ET PAR L'INTERMÉDIAIRE DE PSTN VERS DES DISPOSITIFS DE COMMUNICATION ET PRODUITS DE PROGRAMME INFORMATIQUE CORRESPONDANTS

(43) Date of publication of application: 10.02.2016
(73) Proprietor: Telefonica Digital España, S.L.U., 28013 Madrid (ES)
(72) Inventor: Serna Pozuelo, JORGE, 28013 Madrid (ES); Neystadt, John Eugene, 44471 Kfar-Saba (IL); Urién Pinedo, José Luis, 28013 Madrid (ES); Velasco Benito, Daniel, 28013 Madrid (ES)
(74) Representative: Carlos Hernando, Borja

(56) References cited:
- WO-A1-2007/079578
- WO-A1-2009/046600
- US-A1- 2012 046 013

## Description

### Field of the invention

The present invention generally relates to a method for mobile communication applications. In particular, the invention relates to a method and computer programs products for routing communication calls via VoIP and via PSTN to communication devices, and managing communication call alerts, where any of the communication devices may be dual, that is, it can receive the calls by any of these interfaces.

### Background of the invention

Mobile communication applications, such as Skype®, Viber®, Line®, Tu Go®, provide an ability for receiving incoming communication calls via mobile application, using a Voice/Video Over IP (VoIP) interface (such as Session Initiation Protocol (SIP)), in addition to communication device OS ability to receive native mobile networks call over GSM, VoLTE (Voice over LTE) or other protocols. A key aspect influencing user experience is for communication services to decide whether to route an incoming call to a communication device via native interface (aka Public Switched Telephone Network (PSTN)), VoIP interface or both.

Often, when a mobile communication application is not running in the communication device, communication services send a push notification to the communication device enabling the user to react to it and activate the mobile communication application so that it can pick-up a pending incoming call (call pickup).

Communication services usually combine ringing via VoIP and PSTN, but existing methods of combination, all suffer from deficiencies:
- ringing both interfaces - this creates awkward user experience, when incoming native call interrupts VoIP call being alerted by the mobile communication application.
- ringing only one interface - may lose calls, in case, when there is no PSTN coverage, or PSTN is more expensive (e.g. roaming) vs free WiFi and the user decides not to pick up the native call.
- delaying PSTN call and enabling user to answer in VoIP - in case WiFi is not accessible, cause to lose some calls, as caller may abandon the call attempt before recipient user answers delayed PSTN call.

A known patent in the field is US patent US-B2-8457606, providing techniques allowing choosing among different methods to terminate a call (conventional cellular networks, VoIP calls over non-cellular networks, VoIP calls over cellular data networks, etc.). In said patent, the call is routed to the destination phone number using a first call routing method, and if it fails placing then using a second call routing method. The user can determine routing preferences and the call quality required.

Patent application WO-A1-2009046600 discloses a device and a method for handoff of a VoIP internet telephone call from an IP network to a cellular network and for hand-back of the call to the IP network, in which during or after hand-off of the call an identifier of the hand-off call is obtained and stored and the identifier is used during hand-back of the call to the IP network. The handoff condition could comprise one or more of various factors including, but not limited to, wireless signal strength, current and past transmission and/or reception data error rate, the wireless service provider, quality of service of IP connection, and user manual selection.

Patent application WO-A1-2007079578 discloses a scheme for routing an incoming call in a network environment including a circuit-switched (CS) network and an IP multimedia subsystem (IMS) network, wherein the incoming call is being directed to a user equipment (UE) device disposed in the network environment. A network node disposed in the IMS network is operable to perform a number of determinations with respect to the UE device's domain, state, applicability of user and/or operator policies and preferences, location, etcetera. The incoming call is terminated to an appropriate domain (e.g., CS domain or IMS domain) based at least in part upon the foregoing determinations.

It is desirable to provide, therefore, a new method able to route and to combine VoIP and PSTN alerts (e.g. ringing), in a way that maximizes chance for the incoming call to be answered.

### Summary of the Invention

Present invention provides, in a first aspect, a method for routing communication calls via Voice or Video over IP (VoIP) and via Public Switched Telephone Network (PSTN) to communication devices and for managing communication call alerts, where any of the communication devices may be dual, that is, may receive the communication calls by any of these interfaces.

In the method, a user having at least one communication device running a mobile communication application, configured for said communication device, receives a communication call, wherein the at least one communication device has dual interfaces, a VoIP interface and a PSTN interface, the mobile communication application manages the VoIP interface, and the communication call is routed via a communication call control service.

According to the proposal of the present invention, the user decides, for a given data network, and before the communication call being received (answered), which one of the interfaces is preferred for receiving said communication call, wherein:
a) if the VoIP interface is preferred, the communication call is routed by the communication call control service to the mobile communication application as a VoIP call, and the routing of the communication call over the PSTN interface is delayed; or
b) if the PSTN interface is preferred, the communication call is routed via the PSTN interface as a PSTN call, and if the result of the PSTN call indicates that the communication device is not registered in the PSTN network the communication call is further routed via the VoIP interface.

The communication call may be from another user, but may also be from all kind of communication services, such as those initiating automated calls or managing conference calls.

According to an embodiment, if in step a) (VoIP interface is the preferred interface) the communication call is not answered by the user via the VoIP interface, a communication call notification algorithm is further executed and the delay of the routing of the communication call via the PSTN interface is kept.

According to another embodiment, if in step b) (PSTN interface is the preferred interface) the communication call is not answered via the VoIP interface, a communication call notification algorithm is also executed.

In addition, after the mobile communication application has received the communication call via the VoIP interface, the mobile communication application can check whether the communication call has been also routed to the same device through the PSTN interface. If said checking indicates that the PSTN interface routing was also performed, the mobile communication application, according to an embodiment, stops and rejects the communication call via the VoIP interface, avoiding the redundant alert of the VoIP call to the user and further reports to the communication call control service, if the mobile communication application haven't done it before, that the at least one communication device has dual interfaces. Then, the communication call control service stores the reported information in a database of the communication device for later use.

The communication call control service can store the preferences of the decided interface for said given network in the communication device database, which can be a separate element (e.g. a network element) or be included as part of a Home Subscriber Server (HSS). The decision of the interfaces preferences may be automatically performed, by the mobile communication application, based on at least network quality and/or cost of communication calls over that network, or alternatively, manually by the called user.

In accordance with another aspect, the invention provides a computer program product that has code adapted for carrying out the method of the first aspect when it is executed in a computing device, in a digital signal processor, in a specific circuit integrated in a microcontroller, or any other type of data processing system.

### Brief Description of the Drawings

The previous and other advantages and features will be more fully understood from the following detailed description of embodiments, with reference to the attached, which must be considered in an illustrative and non-limiting manner, in which:

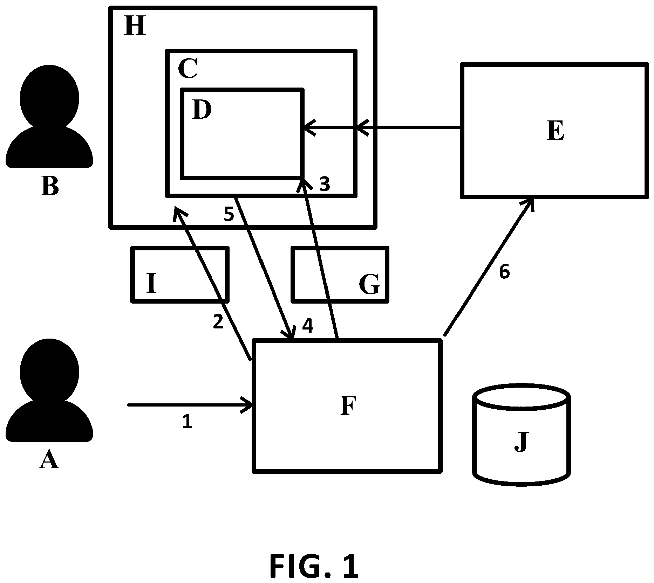

Fig. 1 illustrates the architecture used in the present invention, according to some embodiments, for combining call alerts related to communication calls via VoIP and via PSTN interfaces in a communication device.

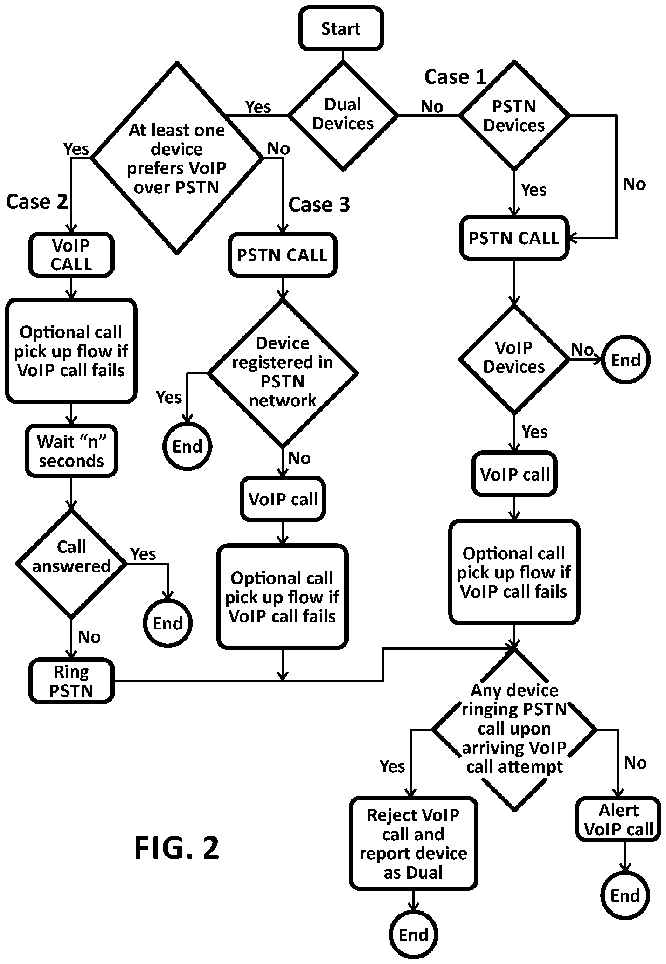

Fig. 2 is a diagram showing the different cases, or embodiments, proposed by the invention for routing communication calls via VoIP and via PSTN interfaces to at least one communication device, and managing call alerts, where any of the devices may be dual, that is, it can receive the calls by any of these interfaces.

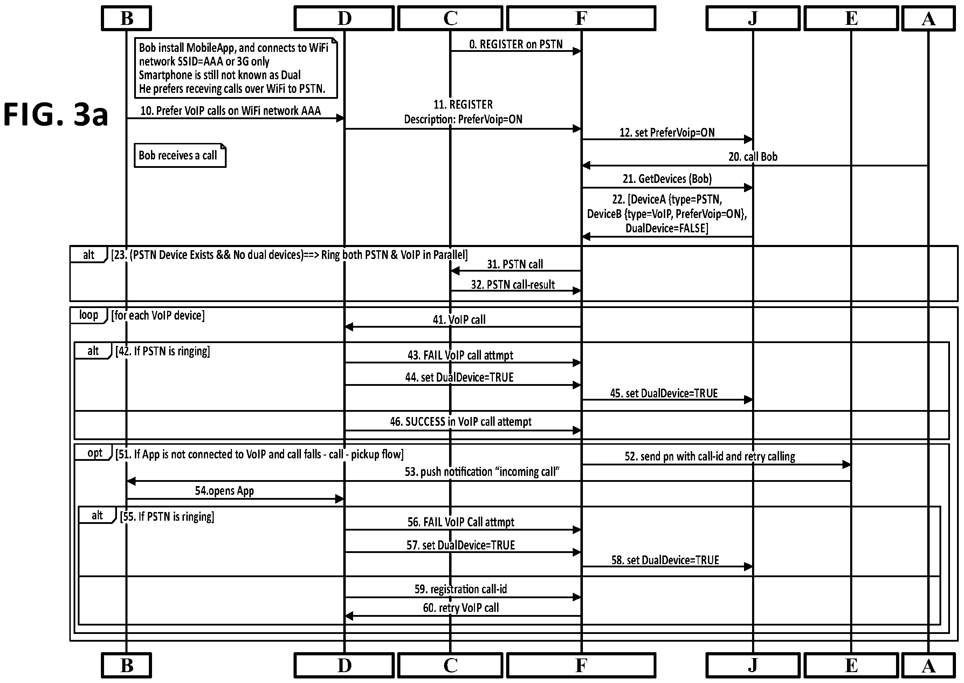

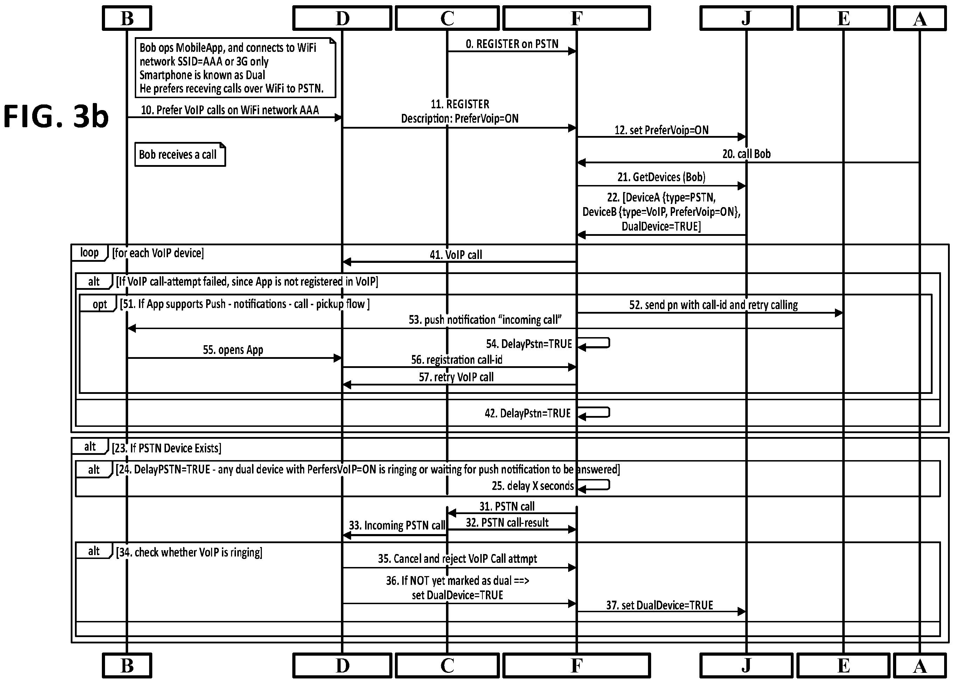

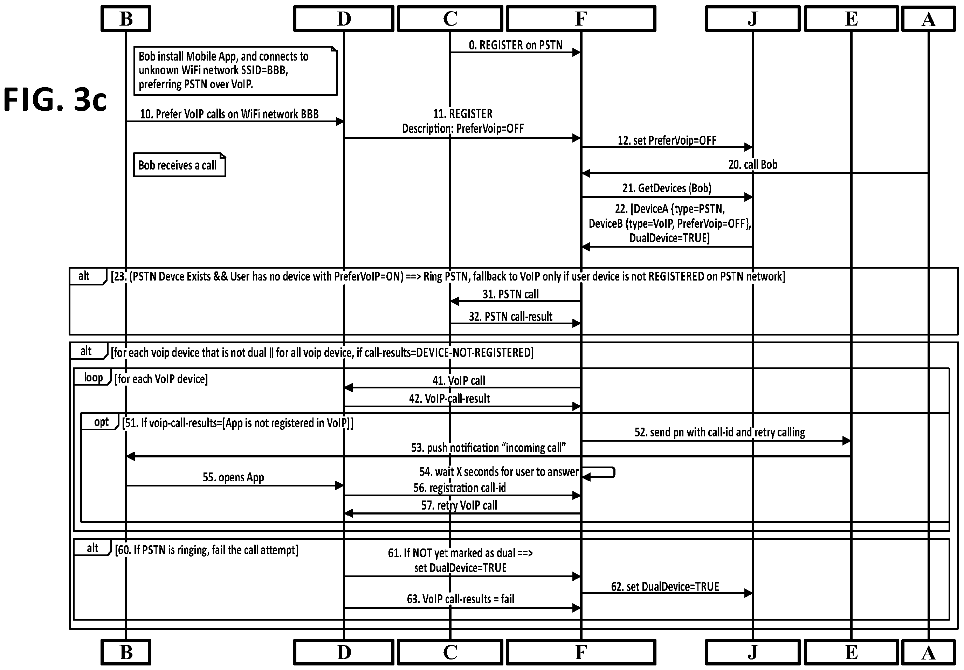

Figs. 3a, 3b and 3c are different flow diagrams illustrating, respectively, the three different provided cases. Fig. 3a illustrates the case for No known Dual communication devices and the user preferring to receive calls on VoIP vs PSTN. Fig. 3b illustrates the case for Dual communication devices and the user preferring to receive calls on VoIP vs PSTN. Fig. 3c illustrates the case for Dual communication devices and the user preferring to receive calls on PSTN vs VoIP.

### Detailed Description of Several Embodiments

The method of the first aspect in general is done by:
- Letting a called user B to indicate on which WiFi network(s) (identified by WiFi Service Set Identifier (SSID)) (s)he prefers VoIP ringing.
- In the case of user B has a single network device - mobile phone or Tablet/PC without SIM-card as opposed to dual devices, which have both SIM-card based connectivity and WiFi/LAN based connectivity, which can receive calls via multiple networks (e.g. PSTN & VoIP) by detecting such dual-networked devices allowing communication services to choose calling the user B communication device via single interfaces, maximizing user-experience, as ringing a dual devices over multiple-interfaces creates awkward user experience.
- Delaying PSTN call, in case dual device is in use, allowing user B to answer in VoIP, as this may take more time, than in PSTN.
- Automatically falling back from PSTN to VoIP or from VoIP to PSTN, if user B is not reachable by the preferred decided method.

In reference to Fig. 1, a user A (or any type of communication services, such as those initiating automated calls or managing conference calls.) calls another user B, which can use one or more communication devices H running mobile communication applications D. Each one of the communication devices H may optionally have a PSTN interface and a VoIP interface, e.g. SIP. The incoming call to user B is routed via a communication call control service F that can be signaled over a (3) VoIP network G or signaled (2) via a PSTN network I that has a database J of the communication device H. Mobile communication application D can update (4) call communication service F on communication Device H reachability via VoIP, storing the status in the database J. In addition mobile communication applications D detects whether communication device H has dual interfaces, when VoIP and PSTN interfaces from same caller ring simultaneously and updates (5) call the communication call control service F on that fact, which is stored in the database J. Then communication call control service F routes (2, 3) incoming calls to User B via PSTN or VoIP interfaces. Moreover, call control service F can also send (6) Push Notifications via a push notification service E, according to orchestration logic described in detail further.

The description of the different embodiments of the invention will now be made with reference to Figs. 2, 3a, 3b and 3c.

Communication device H keeps a list of "known" WiFi networks, over which user B prefers (10, 11) to receive incoming calls over VoIP interface and delay PSTN call attempts. When communication device H connects or disconnects to a new WiFi network, the mobile communication application D is comparing this network SSID, and registers it (11) to VoIP communication call control service F with a flag of PrefersVoIP=ON or PrefersVoIP=OFF, indicating respectively that there is a preference of receiving VoIP calls for this communication device H over PSTN or the opposite, what may have been indicated by the user B (10) or determined by the mobile communication application D itself. Communication call control service F can store (12) registration preference (PrefersVoIP=ON|OFF) in the database J for later use.

The preference of receiving calls on a given WiFi (or 3G) network can be configured manually by user B or, alternatively, configured automatically by the mobile communication application D based on criteria like network quality, cost of calls over that network, etc.

3GPP's Internet Multimedia Subsystem architecture defines a role of HSS - Home Subscriber Server, called also REGISTRAR. This server keeps information about all communication devices H currently registered and reachable in the VoIP network. This solution needs to keep information about user communication devices H (such as whether communication device H is dual), when communication device H is offline, thus additional device database J is used, that can be implemented as part of the HSS or as a separate database.

### No known dual-devices for User B (Case 1 on Fig. 2 and Fig. 3a)

In this embodiment, User B may have multiple PSTN and VoIP enabled communication devices H. User B has a communication device H such as a Smartphone with PSTN and VoIP interfaces. The communication device OS C registers (0) to PSTN network, and user B connects the communication device H to a data network, e.g. WiFi network with SSID named=AAA, and configures (10) the mobile communication application D to prefer to receive VoIP calls vs WiFi on that network. Then, mobile communication application D registers (11) to the communication call control service F, which can store (12) said VoIP preference in the database J. Also, as this is the VoIP communication device that is registered, the communication call control service F is not aware that this is a DUAL VoIP/PSTN communication device, and assumes by default, that User B has two separate communication devices H.

Therefore, upon an incoming call (20) from User A, destined to User B, communication call control service F queries (21) database J and receives (22) indication, on whether User B has any dual communication device H, and a list of two communication devices with the following properties:
- 1^{st} communication device PSTN
- 2^{nd} communication device VoIP, with PrefersVolP property set to ON
- Indication that User B has no DUAL communication devices.

Then, communication call control service F checks (23), that User B has no DUAL communication devices H, and routes (31) a PSTN call to User B's mobile OS C, receiving back (32) a call attempt result. At that point, for each User B's known VoIP communication device, communication call control service F routes (41) a VoIP call to User B's mobile communication application D. Mobile communication application D upon receiving call attempt checks (42), whether these is an incoming call from the same origin on PSTN interface. If PSTN is ringing, it means that User B actually has DUAL device, so in that case, mobile communication application D rejects (43) VoIP call attempt, avoiding the redundant alert of the VoIP call to user B, reports (44) to communication call control service F that communication device H as dual allowing communication call control service F to store this fact in database J.

Alternatively, if communication device H was not DUAL, mobile communication application D reports (46) to communication call control service F a successful call attempt and starts ringing.

If Communication call control service F receives an error from VoIP network, that indicates that mobile communication application D is not registered to the network, and VoIP communication device supports receiving push notifications to wake-up non-running mobile applications, it can attempt to perform a communication call notification algorithm or call-pickup flow that can be implemented in the following way: Communication call control service F sends (52) a notification with call-id to notifications service E, the latter forwarding (53) the received notification to User B's communication device H which alerts User B. User B may respond to the notification, by activating (54) the mobile communication application D. The mobile communication application D, activated via call-pickup flow checks again, whether there is an incoming call from the same origin in PSTN interface. If there is, it rejects VoIP call (56) and reports (57) to communication call control service F that device is dual, allowing the communication call control service F to store (58) this fact in database J.

If there is no PSTN call, the mobile communication application D registers to VoIP network, reporting to Communication call control service F call-id to pick-up. Finally, communication call control service F retries (6) the VoIP call.

### User has a Dual communication device and prefers to receive calls on VoIP vs PSTN (Case 2 on Fig. 2 and Fig. 3b)

In this embodiment, it is illustrated how User B has a communication device H such as a Smartphone with PSTN and VoIP interfaces, which was previously detected as DUAL. The communication device OS C, registers (0) to a PSTN network, and User B connects the communication device H to a data network, e.g. WiFi network with SSID named=AAA, and configures (10) the mobile communication application D to prefer to receive VoIP calls vs PSTN on that network. Then, mobile communication application D registers (11) to the communication call control service F, which can store (12) his VoIP preference in the database J.

Upon an incoming call (20) from User A, destined to User B, communication call control service F queries (21) database J and receives (22) indication, on whether User B has any dual communication device H, and a list of two communication devices with the following properties:
- 1^{st} communication device PSTN
- 2^{nd} communication device VoIP, with PrefersVolP property set to ON
- Indication that User B has DUAL communication devices.

Then, communication call control service F checks (23) that User B has DUAL communication devices H, and for each User B's known VoIP communication device, attempts (41) to route a VoIP call to User B's mobile communication application D delaying PSTN call to allow the VoIP call to be answered.

In case communication call control service F detects that VoIP call initiating failed, because VoIP communication device is not registered to VoIP network, and if VoIP communication device supports receiving notifications, communication call control service F can attempt to perform the above described communication call notification algorithm or call-pickup flow and flags DelayPSTN state indicating that PSTN call initiation must be delayed.

In case VoIP call has been successfully initiated, communication call control service F flags DelayPSTN state to delay PSTN call.

If DelayPSTN state was flagged due to successful initiating of ringing of one of the VoIP communication devices, communication call control service F then delays the calling PSTN for a configurable (n) number of seconds, and if the VoIP call is not successfully answered yet, it routes (31) a PSTN call to User B's communication device H, receiving back (32) a call attempt result, without cancelling ring of VoIP communication devices.

Mobile communication application D upon receiving the call attempt, checks (34) whether this is an incoming call from the same origin on PSTN interface. If PSTN and VoIP are ringing together, it means that User B actually has DUAL communication device H, so in that case the mobile communication application D cancels and rejects (35) VoIP call attempt in that device, avoiding the redundant alert of the VoIP call to user B. If communication device H is not yet marked as DUAL, mobile communication application D reports (36) to communication call control service F that said communication device H is dual, allowing the communication call control service F to store (37) this fact in database J.

### User has Dual Devices, and indicates that he prefers to receive calls over PSTN vs VoIP (Case 3 on Diagram 2, Call Flow on Diagram 3c)

In this embodiment, User B has a communication device H such as a Smartphone with PSTN and VoIP interfaces, which was previously detected as DUAL. The communication device OS C registers (0) to PSTN network and User B connects the communication device H to an unknown data network, e.g. WiFi network with SSID named=BBB, and configures (10) the mobile communication application D to prefer to receive PSTN calls vs VoIP on that network. Then, the mobile communication application D registers (11) to the communication call control service F, which stores (12) his VoIP preference in the database J.

Upon an incoming call (20) from User A, destined to User B, communication call control service F queries (21) database J and receives (22) indication, on whether User B has any dual communication device H, and a list of two communication devices with the following properties:
- 1^{st} communication device PSTN
- 2^{nd} communication device VoIP, with PrefersVolP property set to OFF
- Indication that User B has DUAL communication devices.

Then, communication call control service F checks (23), whether User B has a PSTN communication device. In this case User B also has DUAL communication devices H and none of them is configured as PrefersVoIP=ON, so communication call control service F rings (41) User B's communication device H via PSTN interface and receives (32) [PSTN-call-result] from the network.

If [PSTN-call-result] indicates that User B's communication device H was not registered, fallback to VoIP communication devices with PrefersVoIP=OFF can be attempted, rest of the VoIP communication devices (PrefersVoIP=ON) can be rang always.

For each relevant User B's VoIP communication device communication call control service F performs the following logic to attempt VoIP call: communication call control service F attempts (41) to route a VoIP call to User B's mobile communication application D so VoIP call result is received (42) from the network. If Communication call control service F receives an error from VoIP network, that indicates (51) that mobile communication application D is not registered to the network, and VoIP communication device supports receiving notifications, the communication call control service F can attempt to perform the above described communication call notification algorithm or call-pickup flow (52-57).

Finally, the mobile communication application D upon receiving said call attempt, checks (69) whether this is an incoming call from the same origin on PSTN interface. If PSTN is ringing, it means that User B actually has DUAL communication devices H so, in that case, if communication application device is not yet marked as DUAL, mobile communication application D reports (61) to communication call control service F that said communication device H is dual, allowing the call control service F to store (62) this fact in database J. At that moment, the mobile communication application D rejects (63) VoIP call attempt, avoiding the redundant alert of the VoIP call to user B.

The term "computer-readable storage medium" as used herein refers to any tangible medium, such as a disk or semiconductor memory, that participates in providing instructions to a processor for execution. A general purpose computer may be connected to a storage device such as a hard drive, optical media (CD or DVD), disk media, or any other tangible medium from which the general purpose computer can read executable code.

While certain embodiments have been described, these embodiments have been presented by way of example only, and are not intended to limit the scope of the protection.

The scope of the invention is defined by the attached claims.

## Claims

1. A method for routing communication calls via Voice or Video over IP, VoIP, and via Public Switched Telephone Network, PSTN, to at least one communication device, wherein a user (B) having at least one communication device (H) with a mobile communication application (D) receives a communication call, said at least one communication device (H) having dual interfaces, a VoIP interface and a PSTN interface, said mobile communication application (D) managing the VoIP interface, and said communication call being routed via a communication call control service (F), the method comprising the user (B) deciding, for a given data network, and before the communication call being received, which one of said interfaces be preferred for receiving this communication call, wherein:
a) if the VoIP interface is preferred comprising routing the communication call by the communication call control service (F) to the mobile communication application (D) as a VoIP call, and delaying the routing of the communication call over the PSTN interface to allow the user (B) to answer the call in VoIP; or
b) if the PSTN interface is preferred comprising routing the communication call via the PSTN interface as a PSTN call, and if the result of the PSTN call indicates that said communication device (H) is not registered in the PSTN network further routing the communication call via the VoIP interface,
wherein, after the mobile communication application (D) having received the communication call via the VoIP interface, the method further comprises checking, by the mobile communication application (D), whether there is an incoming call from the same origin on the PSTN interface, wherein if the result of said checking indicates that the call is also being routed in the PSTN interface, the mobile communication application (D) stops and rejects the communication call via the VoIP interface avoiding the redundant alert of the VoIP call and further reports to the communication call control service (F), if haven't done it before, that the at least one communication device (H) has dual interfaces, the communication call control service (F) storing the reported information in a database (J) of the communication device (H).

2. The method of claim 1, wherein in step a) the communication call is not answered by the user (B) via the VoIP interface, the method further comprising executing a communication call notification algorithm and maintaining delaying the routing of the communication call via the PSTN interface, said communication call pickup algorithm comprising:
- the communication call control service (F) sending a push notification including an identification of the communication call to a Notifications Service (E), the latter forwarding the received notification to the communication device (H);
- upon receiving the notification, the user (B) answering the notification by activating the mobile communication application (D);
- the mobile communication application (D) registering to the VoIP network and further reporting to the communication call control service (F) the communication call identification; and
- the communication call control service (F) routing again the communication call via the VoIP interface.

3. The method of claim 1, wherein in step b) the communication call is not answered by the user (B) via the VoIP interface, the method further comprising executing a communication call notification algorithm comprising:
- the communication call control service (F) sending a notification including an identification of the communication call to a Notifications Service (E), the latter forwarding the received notification to the communication device (H);
- upon receiving the notification, the user (B) answering the notification by activating the mobile communication application (D);
- the mobile communication application (D) registering to the VoIP network and further reporting to the communication call control service (F) the communication call identification; and
- the communication call control service (F) routing again the communication call via the VoIP interface.

4. The method of any of previous claims, comprising storing, by the communication call control service (F), preferences of the decided interface for said given network in the communication device database (J).

5. The method of claim 4, wherein said communication device database (J) is included as part of a Home Subscriber Server, HSS.

6. The method of claim 1, wherein the deciding of the interfaces preferences is automatically performed, by the mobile communication application (D), based on at least network quality and/or cost of communication calls over that network.

7. The method of claim 1, wherein the deciding of the interfaces preferences is manually performed.

8. A non-transitory computer readable medium storing a program causing a computer to execute a method for routing communication calls via Voice or Video over IP, VoIP, and via Public Switched Telephone Network, PSTN, to at least one communication device, wherein a user (B) having at least one communication device (H) running a mobile communication application (D) receives a communication call, said at least one communication device (H) having dual interfaces, a VoIP interface and a PSTN interface, said mobile communication application (D) managing the VoIP interface, and said communication call being routed via a communication call control service (F), and upon the user (B) having decided, for a given data network, and before the communication call being received, which one of said interfaces be preferred for receiving the communication call, comprising:
a) if the VoIP interface is preferred, routing the communication call by the communication call control service (F) to the mobile communication application (D) as a VoIP call, and delaying the routing of the communication call over the PSTN interface to allow the user (B) to answer the call in VoIP; or
b) if the PSTN interface is preferred, routing the communication call via the PSTN interface as a PSTN call, and if the result of the PSTN call indicates that said communication device (H) is not registered in the PSTN network further routing the communication call via the VoIP interface; and
further comprising:
- checking, by the mobile communication application (D), after the mobile communication application (D) having received the communication call via the VoIP interface, whether there is an incoming call from the same origin on the PSTN interface;
- stopping and rejecting, the mobile communication application (D), when the result of said checking indicates that the PSTN interface routing is performed, the communication call via the VoIP interface avoiding the redundant alert of the VoIP call;
- reporting, by the mobile communication application (D) to the communication call control service (F), if haven't done it before, that the at least one communication device (H) has dual interfaces; and
- storing, by the communication call control service (F), the reported information in a database (J) of the communication device (H).

9. The non-transitory computer readable medium of claim 8, further comprising storing, by the communication call control service (F), preferences of the decided interface for said given network in the communication device database (J).

## Patentansprüche

1. Verfahren zum Routen von Kommunikationsanrufen über Voice oder Video over IP, VolP, und über Public Switched Telephone Network (dt. öffentliches Telefonnetz), PSTN, an mindestens eine Kommunikationsvorrichtung, wobei ein Benutzer (B), welcher mindestens eine Kommunikationsvorrichtung (H) mit einer mobilen Kommunikationsanwendung (D) hat, einen Kommunikationsanruf empfängt, wobei die mindestens eine Kommunikationsvorrichtung (H) duale Schnittstellen, eine VolP-Schnittstelle und eine PSTN-Schnittstelle, hat, wobei die mobile Kommunikationsanwendung (D) die VolP-Schnittstelle verwaltet und wobei der Kommunikationsanruf über einen Kommunikationsanruf-Steuerdienst (F) geroutet wird, das Verfahren umfassend, dass sich der Benutzer (B) für ein bestimmtes Datennetz und, bevor der Kommunikationsanruf empfangen wird, welche von den Schnittstellen zum Empfangen dieses Kommunikationsanrufs bevorzugt ist, beschließt, wobei:
a) wenn die VolP-Schnittstelle bevorzugt ist, es das Routen des Kommunikationsanrufs durch den Kommunikationsanruf-Steuerdienst (F) an die mobile Kommunikationsanwendung (D) als einen VolP-Anruf und das Verzögern des Routens des Kommunikationsanrufs über die PSTN-Schnittstelle umfasst, um dem Benutzer (B) zu ermöglichen, den Anruf in VolP zu beantworten; oder
b) wenn die PSTN-Schnittstelle bevorzugt ist, es das Routen des Kommunikationsanrufs über die PSTN-Schnittstelle als einen PSTN-Anruf und, wenn das Ergebnis des PSTN-Anrufs darauf hinweist, dass die Kommunikationsvorrichtung (H) in dem PSTN-Netz nicht registriert ist, es ferner das Routen des Kommunikationsanrufs über die VolP-Schnittstelle umfasst,
wobei, nachdem die mobile Kommunikationsanwendung (D) den Kommunikationsanruf über die VolP-Schnittstelle empfangen hat, das Verfahren ferner das Prüfen durch die mobile Kommunikationsanwendung (D), ob ein eingehender Anruf aus demselben Ausgangspunkt an der PSTN-Schnittstelle vorhanden ist, umfasst, wobei, wenn das Ergebnis dieses Prüfens darauf hinweist, dass der Anruf auch an der PSTN-Schnittstelle geroutet wird, die mobile Kommunikationsanwendung (D) den Kommunikationsanruf über die VoIP-Schnittstelle unterbricht und zurückweist, wobei sie die überflüssige Meldung des VolP-Anrufs vermeidet, und ferner, wenn sie es noch nicht getan hat, dem Kommunikationsanruf-Steuerdienst (F) darüber berichtet, dass die mindestens eine Kommunikationsvorrichtung (H) duale Schnittstellen hat, wobei der Kommunikationsanruf-Steuerdienst (F) die berichteten Informationen in einer Datenbank (J) der Kommunikationsvorrichtung (H) speichert.

2. Verfahren nach Anspruch 1, wobei in Schritt a) der Kommunikationsanruf nicht von dem Benutzer (B) über die VolP-Schnittstelle beantwortet wird, wobei das Verfahren ferner das Ausführen eines Kommunikationsanruf-Benachrichtigungsalgorithmus und das Behalten der Verzögerung des Routens des Kommunikationsanrufs über die PSTN-Schnittstelle umfasst, wobei der Kommunikationsanruf-Übernahmealgorithmus Folgendes umfasst:
- Senden einer Push-Benachrichtigung durch den Kommunikationsanruf-Steuerdienst (F), welche eine Identifizierung des Kommunikationsanrufs enthält, an einen Benachrichtigungsdienst (E), wobei letzterer die empfangene Benachrichtigung an die Kommunikationsvorrichtung (H) weiterleitet;
- bei Empfang der Benachrichtigung, Beantworten der Benachrichtigung durch Aktivieren der mobilen Kommunikationsanwendung (D) durch den Benutzer (B);
- Registrieren in dem VolP-Netz und ferner Berichten des Kommunikationsanruf-Steuerdienstes (F) über die Kommunikationsanrufidentifizierung durch die mobile Kommunikationsanwendung (D); und
- erneutes Routen des Kommunikationsanrufs über die VolP-Schnittstelle durch den Kommunikationsanruf-Steuerdienst (F).

3. Verfahren nach Anspruch 1, wobei in Schritt b) der Kommunikationsanruf nicht von dem Benutzer (B) über die VolP-Schnittstelle beantwortet wird, wobei das Verfahren ferner das Ausführen eines Kommunikationsanruf-Benachrichtigungsalgorithmus umfasst, welcher Folgendes umfasst:
- Senden einer Benachrichtigung durch den Kommunikationsanruf-Steuerdienst (F), welche eine Identifizierung des Kommunikationsanrufs enthält, an einen Benachrichtigungsdienst (E), wobei letzterer die empfangene Benachrichtigung an die Kommunikationsvorrichtung (H) weiterleitet;
- bei Empfang der Benachrichtigung, Beantworten der Benachrichtigung durch Aktivieren der mobilen Kommunikationsanwendung (D) durch den Benutzer (B);
- Registrieren in dem VolP-Netz und ferner Berichten des Kommunikationsanruf-Steuerdienstes (F) über die Kommunikationsanrufidentifizierung durch die mobile Kommunikationsanwendung (D); und
- erneutes Routen des Kommunikationsanrufs über die VolP-Schnittstelle durch den Kommunikationsanruf-Steuerdienst (F).

4. Verfahren nach einem der vorhergehenden Ansprüche, welches das Speichern von Bevorzugungen der beschlossenen Schnittstelle für das gegebene Netzwerk in der Datenbank der Kommunikationsvorrichtung (J) umfasst.

5. Verfahren nach Anspruch 4, wobei die Datenbank der Kommunikationsvorrichtung (J) als Teil eines Home Subscriber Server (dt. Heimteilnehmerserver), HSS, enthalten ist.

6. Verfahren nach Anspruch 1, wobei das Beschließen der Bevorzugungen der Schnittstellen automatisch durch die mobile Kommunikationsanwendung (D) basierend mindestens auf der Qualität des Netzes und/oder den Kosten der Kommunikationsanrufe über das Netz durchgeführt wird.

7. Verfahren nach Anspruch 1, wobei das Beschließen der Bevorzugungen der Schnittstellen manuell durchgeführt wird.

8. Nicht-transitorisches computerlesbares Medium, das ein Programm speichert, welches das Veranlassen eines Verfahrens zum Routen von Kommunikationsanrufen über Voice oder Video over IP, VolP, und über Public Switched Telephone Network (dt. öffentliches Telefonnetz), PSTN, an mindestens eine Kommunikationsvorrichtung durch einen Computer veranlasst, wobei ein Benutzer (B), welcher mindestens eine Kommunikationsvorrichtung (H), die eine mobile Kommunikationsanwendung (D) betreibt, hat, einen Kommunikationsanruf empfängt, wobei die mindestens eine Kommunikationsvorrichtung (H) duale Schnittstellen, eine VolP-Schnittstelle und eine PSTN-Schnittstelle, hat, wobei die mobile Kommunikationsanwendung (D) die VolP-Schnittstelle verwaltet und der Kommunikationsanruf über einen Kommunikationsanruf-Steuerdienst (F) geroutet wird, und wobei das Verfahren, wenn der Benutzer (B) ein bestimmtes Datennetz, und bevor der Kommunikationsanruf empfangen wird, welche von den Schnittstellen zum Empfangen dieses Kommunikationsanrufs bevorzugt ist, beschlossen hat, Folgendes umfasst:
a) wenn die VolP-Schnittstelle bevorzugt ist, Routen des Kommunikationsanrufs durch den Kommunikationsanruf-Steuerdienst (F) an die mobile Kommunikationsanwendung (D) als einen VolP-Anruf und Verzögern des Routens des Kommunikationsanrufs über die PSTN-Schnittstelle, um dem Benutzer (B) zu ermöglichen, den Anruf in VolP zu beantworten; oder
b) wenn die PSTN-Schnittstelle bevorzugt ist, Routen des Kommunikationsanrufs über die PSTN-Schnittstelle als einen PSTN-Anruf und, wenn das Ergebnis des PSTN-Anrufs darauf hinweist, dass die Kommunikationsvorrichtung (H) in dem PSTN-Netz nicht registriert ist, ferner Routen des Kommunikationsanrufs über die VoIP-Schnittstelle; und wobei es ferner Folgendes umfasst:
- Prüfen durch die mobile Kommunikationsanwendung (D), nachdem die mobile Kommunikationsanwendung (D) den Kommunikationsanruf über die VolP-Schnittstelle empfangen hat, ob ein eingehender Anruf aus demselben Ausgangspunkt an der PSTN-Schnittstelle vorhanden ist;
- Unterbrechen und Zurückweisen des Kommunikationsanrufs durch die mobile Kommunikationsanwendung (D) über die VolP-Schnittstelle, wobei die überflüssige Meldung des VolP-Anrufs vermieden wird, wenn das Ergebnis des Prüfens darauf hinweist, dass das Routen der PSTN-Schnittstelle durchgeführt wird;
- Berichten des Kommunikationsanruf-Steuerdienstes (F) darüber, dass die mindestens eine Kommunikationsvorrichtung (H) duale Schnittstellen hat, durch die mobile Kommunikationsanwendung (D), wenn sie es vorher nicht getan hat; und
- Speichern der berichteten Informationen in einer Datenbank (J) der Kommunikationsvorrichtung (H) durch den Kommunikationsanruf-Steuerdienst (F).

9. Nicht-transitorisches computerlesbares Medium nach Anspruch 8, welches ferner das Speichern von Bevorzugungen der beschlossenen Schnittstelle für das gegebene Netzwerk in der Kommunikationsvorrichtung-Datenbank (J) umfasst.

## Revendications

1. Procédé pour le routage d'appels de communication par le biais de Voix ou Vidéo sur IP, VoIP, et par le biais de Réseau Téléphonique Commuté Public, RTCP, à au moins un dispositif de communication, dans lequel un utilisateur (B) ayant au moins un dispositif de communication (H) avec une application de communication mobile (D) reçoit un appel téléphonique, ledit au moins un dispositif de communication (H) ayant des interfaces doubles, une interface VoIP et une interface RTCP, ladite application de communication mobile (D) gérant l'interface VoIP, et ledit appel de communication étant routé par le biais d'un service de contrôle d'appel de communication (F),
le procédé comprenant la décision de l'utilisateur (B), pour un réseau de données donné, et avant que l'appel de communication ne soit reçu, de laquelle desdites interfaces est préférée pour recevoir cet appel de communication, dans lequel :
a) si l'interface VoIP est préférée comprenant le routage de l'appel de communication par le service de contrôle d'appel de communication (F) à l'application de communication mobile (D) comme un appel VoIP, et la temporisation du routage de l'appel de communication sur l'interface RTCP pour permettre à l'utilisateur (B) de répondre à l'appel dans VoIP ; ou
b) si l'interface RTCP est préférée comprenant le routage de l'appel de communication par le biais de l'interface RTCP comme un appel RTCP, et si le résultat de l'appel RTCP indique que ledit dispositif de communication (H) n'est pas enregistré dans le réseau RTCP routant en outre l'appel téléphonique par le biais de l'interface VoIP,
dans lequel, après que l'application de communication mobile (D) a reçu l'appel de communication par le biais de l'interface VoIP, le procédé comprend en outre la vérification, par l'application de communication mobile (D), de la présence d'un appel entrant de la même provenance sur l'interface RTCP, dans lequel si le résultat de ladite vérification indique que l'appel est également en train d'être routé dans l'interface RTCP, l'application de communication mobile (D) s'interrompt et rejette l'appel de communication par le biais de l'interface VoIP évitant l'alerte redondante de l'appel VoIP et signale en outre au service de contrôle d'appel de communication (F), si elle ne l'a pas fait avant, que ledit au moins un dispositif de communication (H) a des interfaces doubles, le service de contrôle d'appel de communication (F) stockant les informations signalées dans une base de données (J) du dispositif de communication (H).

2. Procédé selon la revendication 1, dans lequel dans l'étape a) l'appel de communication n'est pas répondu par l'utilisateur (B) par le biais de l'interface VoIP, le procédé comprenant en outre l'exécution d'un algorithme de notification d'appel de communication et le maintien de la temporisation du routage de l'appel de communication par le biais de l'interface RTCP, ledit algorithme de prise d'appel de communication comprenant :
- le service de contrôle d'appel de communication (F) envoyant une notification push incluant une identification de l'appel de communication à un Service de Notifications (E), ce dernier transmettant la notification reçue au dispositif de communication (H) ;
- après la réception de la notification, l'utilisateur (B) répondant à la notification en activant l'application de communication mobile (D) ;
- l'application de communication mobile (D) s'enregistrant au réseau VoIP et signalant en outre au service de contrôle d'appel de communication (F) l'identification d'appel de communication ; et
- le service de contrôle d'appel de communication (F) routant encore l'appel de communication par le biais de l'interface VoIP.

3. Procédé selon la revendication 1, dans lequel dans l'étape b) l'appel de communication n'est pas répondu par l'utilisateur (B) par le biais de l'interface VoIP, le procédé comprenant en outre l'exécution d'un algorithme de notification d'appel de communication comprenant :
- le service de contrôle d'appel de communication (F) envoyant une notification incluant une identification de l'appel de communication à un Service de Notifications (E), ce dernier transmettant la notification reçue au dispositif de communication (H) ;
- après la réception de la notification, l'utilisateur (B) répondant à la notification en activant l'application de communication mobile (D) ;
- l'application de communication mobile (D) s'enregistrant au réseau VoIP et signalant en outre au service de contrôle d'appel de communication (F) l'identification d'appel de communication ; et
- le service de contrôle d'appel de communication (F) routant encore l'appel de communication par le biais de l'interface VoIP.

4. Procédé selon l'une quelconque des revendications précédentes, comprenant le stockage, par le service de contrôle d'appel de communication (F), des préférences de l'interface décidée pour ledit réseau donné dans la base de données du dispositif de communication (J).

5. Procédé selon la revendication 4, dans lequel ladite base de données du dispositif de communication (J) est incluse au sein d'un Serveur d'Abonné Résidentiel, HSS.

6. Procédé selon la revendication 1, dans lequel la décision des préférences d'interfaces est automatiquement réalisée, par l'application de communication mobile (D), sur la base d'au moins une qualité de réseau et/ou coût d'appels de communication sur ce réseau.

7. Procédé selon la revendication 1, dans lequel la décision des préférences d'interfaces est manuellement réalisée.

8. Support lisible par ordinateur non-transitoire stockant un logiciel amenant un ordinateur à exécuter un procédé pour le routage des appels de communication par le biais de Voix ou Vidéo sur IP, VoIP, et par le biais de Réseau Téléphonique Commuté Public, RTCP, à au moins un dispositif de communication, dans lequel un utilisateur (B) ayant au moins un dispositif de communication (H) faisant fonctionner une application de communication mobile (D) reçoit un appel téléphonique, ledit au moins un dispositif de communication (H) ayant des interfaces doubles, une interface VoIP et une interface RTCP, ladite application de communication mobile (D) gérant l'interface VoIP, et ledit appel de communication étant routé par le biais d'un service de contrôle d'appel de communication (F), et après que l'utilisateur (B) a décidé, pour un réseau de données donné, et avant que l'appel de communication ne soit reçu, laquelle desdites interfaces est préférée pour recevoir l'appel de communication, comprenant :
a) si l'interface VoIP est préférée, le routage de l'appel de communication par le service de contrôle d'appel de communication (D) comme un appel VoIP, et la temporisation du routage de l'appel de communication sur l'interface RTCP pour permettre à l'utilisateur (B) de répondre à l'appel dans VoIP ; ou
a) si l'interface RTCP est préférée, le routage de l'appel de communication par le biais de l'interface RTCP comme un appel RTCP, et si le résultat de l'appel RTCP indique que ledit dispositif de communication (H) n'est pas enregistré dans le réseau RTCP routant en outre l'appel téléphonique par le biais de l'interface VoIP ; et
comprenant en outre :
- la vérification, par l'application de communication mobile (D), après que l'application de communication mobile (D) a reçu l'appel de communication par le biais de l'interface VoIP, s'il y a un appel entrant de la même provenance sur l'interface RTCP ;
- l'interruption et le rejet, par l'application de communication mobile (D), lorsque le résultat de ladite vérification indique que le routage de l'interface RTCP est réalisé, l'appel de communication par le biais de l'interface VoIP évitant l'alerte redondante de l'appel VoIP ;
- le signalement, par l'application de communication mobile (D) au service de contrôle d'appel de communication (F), si elle ne l'a pas fait avant, que ledit au moins un dispositif de communication (H) a des interfaces doubles ; et
- le stockage, par le service de contrôle d'appel de communication (F), des informations signalées dans une base de données (J) du dispositif de communication (H).

9. Support lisible par ordinateur non-transitoire selon la revendication 8, comprenant en outre le stockage, par le service de contrôle d'appel de communication (F), des préférences de l'interface décidée pour ledit réseau donné dans la base de données du dispositif de communication (J).
